(19) Europäisches Patentamt
European Patent Office
Office européen des brevets

(11) **EP 3 418 413 B1**

(12) **EUROPEAN PATENT SPECIFICATION**

(45) Date of publication and mention
of the grant of the patent:
**17.06.2020   Bulletin 2020/25**

(21) Application number: **17752851.0**

(22) Date of filing: **12.01.2017**

(51) Int Cl.:
*B32B 15/01* (2006.01)          *C23C 2/02* (2006.01)
*C23C 2/06* (2006.01)          *C23C 2/40* (2006.01)
*C22C 38/06* (2006.01)          *C21D 6/00* (2006.01)
*C21D 9/46* (2006.01)          *C22C 38/02* (2006.01)
*C22C 38/04* (2006.01)          *C21D 8/02* (2006.01)
*C21D 8/04* (2006.01)          *C21D 9/48* (2006.01)
*C21D 1/28* (2006.01)

(86) International application number:
**PCT/JP2017/000878**

(87) International publication number:
**WO 2017/141587 (24.08.2017 Gazette 2017/34)**

(54) **HIGH-STRENGTH COLD-ROLLED STEEL SHEET, AND PRODUCTION METHOD THEREFOR**

HOCHFESTES KALTGEWALZTES STAHLBLECH UND HERSTELLUNGSVERFAHREN DAFÜR

TÔLE D'ACIER LAMINÉE À FROID À HAUTE RÉSISTANCE MÉCANIQUE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2016   JP 2016029273**

(43) Date of publication of application:
**26.12.2018   Bulletin 2018/52**

(73) Proprietor: **JFE Steel Corporation**
**Tokyo 100-0011 (JP)**

(72) Inventors:
• **TANAKA Yuji**
  **Tokyo 100-0011 (JP)**
• **MIKMEKOVA Sarka**
  **Tokyo 100-0011 (JP)**

• **YAMASHITA Takako**
  **Tokyo 100-0011 (JP)**
• **OBATA Yoshie**
  **Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**WO-A1-2015/011554          WO-A1-2015/174605**
**JP-A- 2004 218 025          JP-A- 2005 179 732**
**JP-A- 2007 154 283          JP-A- 2011 168 816**
**JP-A- 2011 195 956          JP-A- 2012 153 957**
**JP-A- 2013 227 654**

**Description**

TECHNICAL FIELD

The present disclosure relates to a high-strength cold rolled steel sheet and a method of producing the same, and in particular to a high-strength cold rolled steel sheet that has a low yield ratio and excellent workability.

BACKGROUND

Various steel sheets with controlled steel structures (microstructures) have been developed in recent years, as steel sheets having both high strength and excellent workability.

For example, JP 5438302 B2 (PTL 1) discloses a high-yield-ratio and high-strength hot-dip galvanized steel sheet having excellent workability with a tensile strength of 980 MPa or more, and a method of producing the same.

JP 2015-014026 A (PTL 2) discloses an ultra-high-strength cold rolled steel sheet having excellent elongation and stretch flangeability with a tensile strength of 1180 MPa or more, and a method of producing the same.

JP 2011 195956 A (PTL 3) provides a high strength thin steel sheet having excellent elongation and hole expansibility characterized in that the steel sheet has a specific steel composition and a metallic structure mainly comprising ferrite or bainite or tempered martensite and containing 3 to 20% of a retained austenite phase.

JP 2012 153957 A (PTL 4) provides a high-strength cold-rolled steel sheet with excellent ductility, which has tensile strength of 1,180 MPa or more. The steel sheet includes, by mass%, C: 0.16-0.20%, Si: 1.0-2.0%, Mn: 2.5-3.5%, P: 0.030% or less, S: 0.0050% or less, Al: 0.005-0.1%, N: 0.01% or less, Ti: 0.001-0.050%, B: 0.0001-0.0050%, and the balance Fe and unavoidable impurities as a component composition and has a structure including, by volume fraction, ferrite phase: 40-65%, martensite phase: 30-55% and residual austenite phase: 5-15%.

CITATION LIST

Patent Literatures

    PTL 1: JP 5438302 B2
    PTL 2: JP 2015-014026 A
    PTL 3: JP 2011 195956 A
    PTL 4: JP 2012 153957 A

SUMMARY

(Technical Problem)

Working of a steel sheet for automobiles often involves press working. If the yield ratio is high, not only the load during press working is high, but also a problem of spring-back phenomenon in which the steel sheet tries to return to its original shape after the press working arises.

Moreover, to ensure crashworthiness of automobiles, it has been demanded in recent years to use, in automotive parts, steel sheets that deform easily at the time of a collision, to design such an automotive body structure that absorbs collision energy. Hence, the development of steel sheets that have both high strength and excellent workability and also have a low yield ratio has been desired.

The steel sheet described in PTL 1 is a steel sheet with a high yield ratio, and is not suitable for the above-mentioned purpose.

The steel sheet described in PTL 2 is not designed in consideration of the yield strength and the yield ratio.

Besides, both the steel sheet described in PTL 1 and the steel sheet described in PTL 2 may be unable to achieve sufficient ductility, and thus have a problem with workability.

It could be helpful to provide a high-strength cold rolled steel sheet that has both high strength, i.e. a tensile strength of 900 MPa or more, and excellent workability, i.e. a total elongation of 20 % or more, and also has a low yield ratio, i.e. a yield ratio of less than 60 %.

It could also be helpful to provide a method of producing the high-strength cold rolled steel sheet.

(Solution to Problem)

As a result of repeatedly conducting close study in order to develop a high-strength cold rolled steel sheet that has both high strength, i.e. a tensile strength of 900 MPa or more, and excellent workability, i.e. a total elongation of 20 % or more, and also has a low yield ratio, i.e. a yield ratio of less than 60 %, we discovered the following points.

(1) To achieve both a tensile strength of 900 MPa or more and a total elongation of 20 % or more, it is effective to appropriately adjust the chemical composition, and form the steel structure as a multi-phase structure that has ferrite, martensite, and retained austenite each at an appropriate mix proportion, to utilize the TRIP effect by retained austenite.

(2) The mechanical properties, and in particular the yield ratio, of the steel sheet are not determined uniquely by the chemical composition and the area ratio (hereafter also referred to as "microstructure proportion") of each phase in the steel structure, and can vary greatly even in the case where the chemical composition and the microstructure proportions are approximately the same.

(3) We accordingly looked at the morphology of each phase, and conducted detailed observation and analysis on the steel structure using a field emission scanning electron microscope (FE-SEM). The results indicate that the morphology of retained austenite, and in particular the crystal grain circularity of retained austenite, influence the yield ratio of the steel sheet. By appropriately controlling the crystal grain circularity of retained austenite, the steel sheet can have a desired yield ratio.

(4) The crystal grain circularity of retained austenite in the final structure can be appropriately controlled by particularly adjusting the coiling temperature and the cooling conditions after hot rolling to form the hot rolled sheet structure before annealing treatment as a ferrite-pearlite dual phase structure, and subsequently performing annealing in the ferrite-austenite dual phase region and performing overaging treatment under predetermined conditions.

The present invention is based on these discoveries and further studies.

We thus provide a high-strength cold rolled steel sheet according to claims 1 and 2 as well as a method of producing said high-strength cold rolled steel sheet sheet according to claims 3 and 4.

(Advantageous Effect)

It is thus possible to obtain a high-strength cold rolled steel sheet that has both high strength, i.e. a tensile strength of 900 MPa or more, and excellent workability, i.e. a total elongation of 20 % or more, and also has a low yield ratio, i.e. a yield ratio of less than 60 %.

By using such a high-strength cold rolled steel sheet in a predetermined automotive part, an automotive body structure that absorbs collision energy at the time of a collision can be designed, and also fuel efficiency can be improved through automotive body weight reduction. The present disclosure is therefore industrially very useful.

BRIEF DESCRIPTION OF THE DRAWINGS

In the accompanying drawings:

FIG. 1 is a diagram illustrating an example of a histogram representing a distribution of crystal grain circularity of retained austenite;

FIG. 2A is a diagram illustrating an example of a secondary electron image obtained in the case of observing a steel structure by an FE-SEM;

FIG. 2B is a diagram illustrating an example of an image obtained by observing the steel structure by EBSD and analyzing it by predetermined PC software;

FIG. 3A is a diagram illustrating an FE-SEM image (secondary electron image observed with an accelerating voltage of 15 kV at 2000 magnifications) indicating the steel structure of steel sheet No. 1 in Examples; and

FIG. 3B is a diagram illustrating an FE-SEM image (secondary electron image observed with an accelerating voltage of 1 kV at 5000 magnifications) indicating the steel structure of steel sheet No. 1 in Examples.

DETAILED DESCRIPTION

The reasons for limiting the chemical composition of a high-strength cold rolled steel sheet according to the present invention are given below.

While the unit of the content of each element in the chemical composition is "mass%," the unit is hereafter simply expressed by "%" unless otherwise specified.

C: 0.15 % to 0.35 %

C is an important element to contribute to higher strength of the steel sheet and obtain retained austenite. When producing the steel sheet according to the present invention, ferrite transformation progresses during overaging treatment after annealing. Since ferrite hardly dissolves C, C concentrates in non-transformed austenite, and austenite is stabilized. As a result, retained austenite is obtained in the final structure, thus improving elongation. Moreover, part of austenite in which the concentration of C is insufficient undergoes martensite transformation, and becomes a hard phase (martensite) in which C has been dissolved in a supersaturated state. This contributes to improved strength. If the C content is less than 0.15 %, sufficient strength cannot be obtained. If the C content is more than 0.35 %, weldability degrades noticeably. The C content is therefore in a range of 0.15 % to 0.35 %. The C content is preferably 0.15 % or more. The C content is preferably 0.28 % or less.

Si: 1.0 % to 2.0 %

Si is an important element to suppress cementite formation during overaging and obtain a sufficient amount of retained austenite. If the Si content is less than 1.0 %, this effect cannot be achieved. If the Si content is more than 2.0 %, surface oxidation during hot rolling and annealing is noticeable, which adversely affects appearance and coatability. The Si content is therefore in a range of 1.0 % to 2.0 %. The Si content is preferably 1.2 % or more. The Si content is preferably 1.8 % or less.

Mn: 1.8 % to 3.5 %

Mn has an effect of stabilizing retained austenite. If the Mn content is less than 1.8 %, the effect is weak. If the Mn content is more than 3.5 %, ferrite transformation during overaging treatment and retained austenite formation are suppressed, which makes it difficult to obtain desired elongation. The Mn content is therefore in a range of 1.8 % to 3.5 %. The Mn content is preferably 1.9 % or more. The Mn content is preferably 2.5 % or less.

P: 0.020 % or less

P decreases weldability, and so the P content is desirably as low as possible. The P content is therefore 0.020 % or less. The P content is preferably 0.015 % or less.

S: 0.0040 % or less

S forms inclusions and decreases local elongation, and so the S content is desirably as low as possible. The S content is therefore 0.0040 % or less. The S content is preferably 0.0020 % or less.

Al: 0.01 % to 0.1 %

Al is added as a deoxidizer. If the Al content is less than 0.01 %, the effect is weak. If the Al content is more than 0.1 %, inclusions form, and local elongation decreases. The Al content is therefore in a range of 0.01 % to 0.1 %. The Al content is preferably 0.02 % or more. The Al content is preferably 0.06 % or less.

N: 0.01 % or less

N is an element that affects strain ageing, and is desirably as low as possible. The N content is therefore 0.01 % or less. The N content is preferably 0.006 % or less.
The balance other than those described above consists of Fe and inevitable impurities.
The steel structure of the high-strength cold rolled steel sheet according to the present invention is described below.

Area ratio of ferrite: 30 % to 75 %

Ferrite is a soft phase, and contributes to improved elongation. If the area ratio of ferrite is less than 30 %, martensite increases and strength increases excessively, and elongation decreases. If the area ratio of ferrite is more than 75 %, the area ratio of martensite decreases, and desired strength cannot be ensured. The area ratio of ferrite is therefore in a range of 30 % to 75 %. The area ratio of ferrite is preferably 40 % or more. The area ratio of ferrite is preferably 70 % or less.

Area ratio of martensite: 15 % to 40 %

Martensite is a hard phase, and contributes to improved strength. If the area ratio of martensite is less than 15 %, desired strength cannot be ensured. If the area ratio of martensite is more than 40 %, strength increases excessively, and elongation decreases. The area ratio of martensite is therefore in a range of 15 % to 40 %. The area ratio of martensite is preferably 20 % or more. The area ratio of martensite is preferably 35 % or less.

Area ratio of retained austenite: 10 % to 30 %

Retained austenite greatly contributes to improved elongation through the TRIP effect. If the area ratio of retained austenite is less than 10 %, desired elongation cannot be obtained. On the other hand, as the area ratio of retained austenite increases, the C concentration in retained austenite decreases, and the stability of retained austenite decreases. Hence, industrially obtaining retained austenite with an area ratio of more than 30 % is difficult in terms of control. The area ratio of retained austenite is therefore in a range of 10 % to 30 %. The area ratio of retained austenite is preferably 12 % or more. The area ratio of retained austenite is preferably 28 % or less.
The steel structure is basically composed of ferrite, martensite, and retained austenite described above. The steel structure, however, may include trace amounts of carbides such as cementite and inclusions such as TiN, and their total area ratio of 1 % or less is allowable.

Mode of crystal grain circularity of retained austenite: 0.7 or more

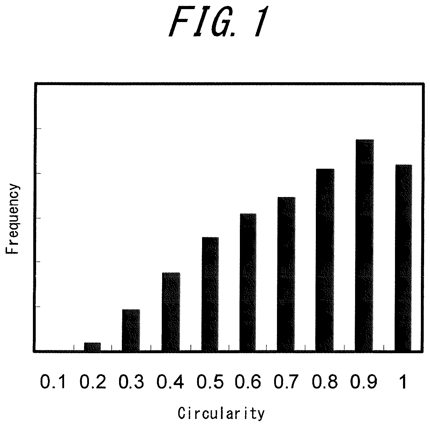

The crystal grain circularity of retained austenite influences the yield ratio of the steel sheet, as mentioned earlier. By limiting the mode of crystal grain circularity of retained austenite to 0.7 or more, a desired low yield ratio, i.e. a yield ratio of less than 60 %, can be obtained.
Although the mechanism in which the crystal grain circularity of retained austenite influences the yield ratio of the steel sheet is not entirely clear, we consider that microscopic stress distribution changes depending on morphology.
In detail, when the mode of crystal grain circularity of retained austenite (hereafter also simply referred to as "circularity") is low, many crystal grains of retained austenite assume a long and narrow shape. In the case where a tensile load is applied to the steel sheet, how stress is applied differs depending on in which direction the shape of crystal grains of retained austenite extends with respect to the tensile direction. In such a case, crystal grains of retained austenite in a long and narrow shape, even when subjected to stress, do not undergo the TRIP phenomenon, and instead ferrite or martensite is subjected to the stress. Since the TRIP phenomenon is an irreversible plastic deformation, a phase yields if the TRIP phenomenon occurs. However, ferrite and martensite elastically deform when subjected to stress, and accordingly do not yield, but act to increase the yield ratio. Thus, when the mode of crystal grain circularity of retained austenite decreases, the yield ratio of the steel sheet increases. When the mode of crystal grain circularity of retained austenite increases, on the other hand, the TRIP phenomenon occurs in most of retained austenite in the steel, as a result of which the yield ratio decreases.
The mode of crystal grain circularity of retained austenite mentioned here is the mode of circularity in the case where the distribution of crystal grain circularity of retained austenite is represented by a histogram with a class range of more than $0.1 \times (n - 1)$ and $0.1 \times n$ or less and a class value of $0.1 \times n$ (n is an integer from 1 to 10), as illustrated in FIG. 1. The "mode" denotes a class value corresponding to the maximum frequency (the number of crystal grains) in the above-mentioned circularity distribution. In FIG. 1, the mode is 0.9.
The circularity of each crystal grain of retained austenite is calculated according to the following formula:

$$\text{circularity} = 4\pi S/L^2$$

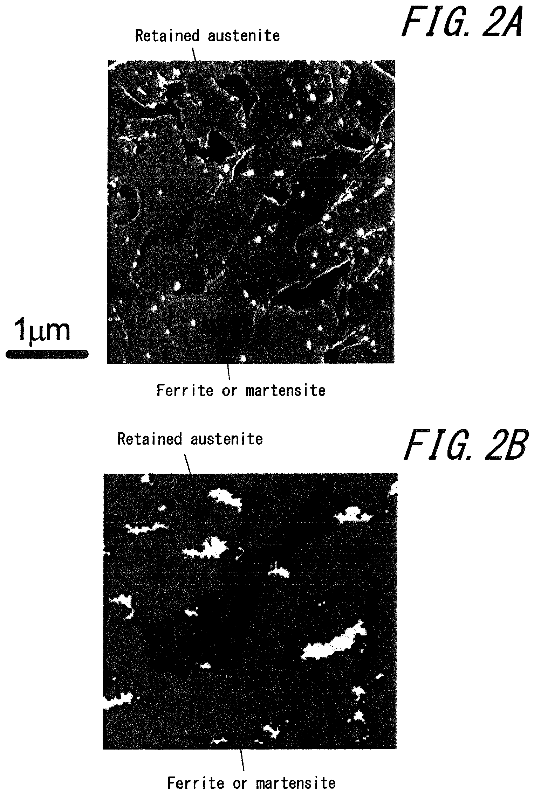

where S is the area of the crystal grain of retained austenite, and L is the perimeter of the crystal grain of retained austenite.
Given that crystal grains of retained austenite in the steel sheet have various morphologies, it is preferable to measure the circularity of each of 1000 or more crystal grains of retained austenite, in order to statistically determine circularity.
Moreover, it is preferable to measure the circularity of each crystal grain of retained austenite by image processing on an image observed by a field emission scanning electron microscope (FE-SEM).
In detail, after mirror polishing a sample cross-section of a steel sheet, an appropriate structure etching process is performed, and secondary electron image observation is conducted by the FE-SEM. In this way, the morphology of retained austenite can be observed at high resolution, as illustrated in FIG. 2A. As the etching process, for example, nital and electropolishing etching may be used. By observing not a center part but a peripheral part of an etched region with an in-lens detector or an Everhart-Thornley detector of the FE-SEM, it is possible to observe retained austenite alone as being always darker than ferrite and martensite in contrast. Here, the accelerating voltage of the FE-SEM is preferably 2 kV or less (white portions in FIG. 2A represent residual particles of a polishing agent).

A method of attaching an electron backscattered diffraction (EBSD) detector to an SEM and analyzing an observed image by PC software is widely used as a technique of determining crystal phases of steel structures. However, in an image observed by EBSD, the boundaries of crystal grains of retained austenite of 50 nm or less in size (corresponding to white portions in FIG. 2B) are vague as illustrated in FIG. 2B, and the area S and perimeter L of each crystal grain of retained austenite cannot be accurately determined in some regions. In the above-mentioned FE-SEM image, on the other hand, even retained austenite of 50 nm or less in size is observable at high resolution. Thus, circularity can be measured with high accuracy, even for crystal grains of retained austenite of 50 nm or less in size.

As image processing for an FE-SEM observed image, image processing based on contrast may be used easily. For example, an image is binarized using ImageJ software which is free software, and circularity calculated from the area and perimeter of each extracted crystal grain of retained austenite is output.

The crystal grains of retained austenite subjected to circularity measurement are crystal grains with a crystal grain size (minor axis length) of 10 nm or more. Moreover, the number of crystal grains corresponding to a circularity class value of 0.7 or more is preferably more than 50 % of all crystal grains.

A method of producing a high-strength cold rolled steel sheet according to the present invention is described below.

The method of producing a high-strength cold rolled steel sheet according to the present invention comprises: heating a steel slab having the chemical composition described above, to 1100 °C or more and 1200 °C or less; thereafter hot rolling the steel slab at a finisher delivery temperature of 850 °C or more and 950 °C or less, to obtain a hot rolled sheet; cooling the hot rolled sheet, with a cooling rate in a temperature range from the finisher delivery temperature to 700 °C of 50 °C/s or more; coiling the hot rolled sheet at 550 °C or more and 650 °C or less; thereafter cooling the hot rolled sheet to 100 °C or less by water cooling; pickling the hot rolled sheet; thereafter cold rolling the hot rolled sheet to obtain a cold rolled sheet; annealing the cold rolled sheet at 730 °C or more and 820 °C or less; thereafter cooling the cold rolled sheet to 300 °C or more and 500 °C or less; and then performing an overaging treatment of holding the cold rolled sheet in the temperature range of 300 °C or more and 500 °C or less for 100 s or more and 1000 s or less.

The reasons for limiting the production method as described above are given below.

Slab heating temperature: 1100 °C or more and 1200 °C or less

If the slab heating temperature is less than 1100 °C, the rolling load increases, and problems such as an increased risk of troubles during hot rolling arise. If the slab heating temperature is more than 1200 °C, the energy load for heating is high, and scale loss increases. The slab heating temperature is therefore 1100 °C or more and 1200 °C or less.

Finisher delivery temperature in hot rolling: 850 °C or more and 950 °C or less

If the finisher delivery temperature in the hot rolling is less than 850 °C, the deformation resistance during the hot rolling increases. If the finisher delivery temperature in the hot rolling is more than 950 °C, crystal grains coarsen, and the strength decreases. The finisher delivery temperature in the hot rolling is therefore 850 °C or more and 950 °C or less.

Cooling rate in temperature range from finisher delivery temperature to 700 °C: 50 °C/s or more

If the cooling rate in the temperature range from the finisher delivery temperature to 700 °C after the hot rolling is less than 50 °C/s, the ferrite grain size increases, and the strength decreases. The cooling rate in the temperature range from the finisher delivery temperature to 700 °C is therefore 50 °C/s or more.

Coiling temperature: 550 °C or more and 650 °C or less

The coiling temperature of the hot rolled sheet after the hot rolling is particularly important in limiting the crystal grain circularity of retained austenite in the final structure of the steel sheet to the predetermined range. In detail, in order to limit the crystal grain circularity of retained austenite to the predetermined range and obtain the desired low yield ratio, it is important to form the steel structure of the hot rolled sheet before annealing treatment as a ferrite-pearlite dual phase structure, and then perform annealing in the ferrite-austenite dual phase region. If the coiling temperature is less than 550 °C, a low temperature transformation phase such as bainite forms in the steel structure of the hot rolled sheet. This causes many crystal grains of retained austenite obtained through the subsequent annealing and overaging treatment to have low circularity, and results in an increase in yield ratio. If the coiling temperature is more than 650 °C, crystal grains coarsen, as a result of which not only the tensile strength decreases, but also the appearance and coatability decrease due to surface oxidation of Si or Mn. The coiling temperature is therefore 550 °C or more and 650 °C or less. The coiling temperature is preferably 560 °C or more, and more preferably 590 °C or more. The coiling temperature is preferably 620 °C or less.

Cooling conditions after coiling: cooling to 100 °C or less by water cooling

The cooling conditions after the coiling are also important in limiting the formation amount and crystal grain circularity of retained austenite in the final structure of the steel sheet to the predetermined ranges, as with the above-mentioned coiling temperature. In detail, in order to limit the formation amount and crystal grain circularity of retained austenite in the final structure of the steel sheet to the predetermined ranges, it is necessary to form the steel structure of the hot rolled sheet before annealing treatment as a ferrite-pearlite dual phase structure, and also appropriately control the nucleation site of austenite phase-transformed from ferrite during the annealing treatment.

By cooling the hot rolled sheet to 100 °C or less by water cooling after the coiling, carbon in the steel dissolves in ferrite grains. Such carbon dissolved in ferrite grains diffuses to and concentrates in pearlite during the annealing treatment, and austenite transformation occurs circularly from this pearlite. Thus, the desired formation amount and crystal grain circularity of retained austenite can be obtained in the final structure of the steel sheet.

If the cooling is not performed by water cooling or if the cooling stop temperature is more than 100 °C, part of carbon segregates to ferrite grain boundaries, and austenite is transformed from ferrite grain boundaries during the annealing treatment and forms coarse austenite grains. Coarse austenite grains are low in carbon content, so that retained austenite is unstable. Consequently, the area ratio of retained austenite decreases, and ductility decreases.

Therefore, the cooling conditions after the coiling are that the hot rolled sheet is cooled to 100 °C or less by water cooling.

After coiling the hot rolled sheet, the hot rolled sheet is pickled. The hot rolled sheet is then cold rolled, to obtain a cold rolled sheet. The pickling conditions and the cold rolling conditions are not limited, and may comply with conventional methods.

Annealing temperature: 730 °C or more and 820 °C or less

The cold rolled sheet obtained in this way is then annealed. It is important to form, from the ferrite-pearlite dual phase structure of the hot rolled sheet formed during the coiling after the hot rolling, a ferrite-austenite dual phase structure, and perform annealing. In detail, ferrite becomes a structure low in dislocation density in the process of annealing, and contributes to improved ductility. Regarding pearlite, on the other hand, lamellar cementite spheroidizes in the process of annealing, from which austenite nucleates. As a result, a structure in which circular austenite is dispersed forms.

If the annealing temperature is less than 730 °C, carbides (cementite) in pearlite do not melt. This causes insufficient C in martensite formed in the overaging treatment, and results in a decrease in strength. Besides, retained austenite obtained by the overaging treatment decreases, and ductility decreases. Furthermore, crystal grains with low circularity increase in retained austenite obtained by the overaging treatment.

If the annealing temperature is more than 820 °C, the proportion of austenite during the annealing is excessive, and austenite grains connect to each other. This causes the formation of irregular-shaped austenite, as a result of which retained austenite obtained by the overaging treatment decreases, and ductility decreases. Moreover, crystal grains with low circularity increase in retained austenite obtained by the overaging treatment, and consequently the yield ratio increases. The annealing temperature is therefore 730 °C or more and 820 °C or less. The annealing temperature is preferably 740 °C or more. The annealing temperature is preferably 810 °C or less.

Overaging treatment conditions: holding in temperature range of 300 °C or more and 500 °C or less for 100 s or more and 1000 s or less

After the annealing, the cold rolled sheet is cooled to a temperature range of 300 °C or more and 500 °C or less and then overaging treatment of holding the cold rolled sheet in this temperature range for 100 s or more and 1000 s or less is performed.

If the overaging treatment temperature is less than 300 °C, austenite undergoes martensite transformation. As a result, a predetermined amount of retained austenite cannot be obtained, and elongation decreases. If the overaging treatment temperature is more than 500 °C, ferrite transformation from austenite does not progress sufficiently, causing insufficient concentration of C in austenite. As a result, a predetermined amount of retained austenite cannot be obtained, and elongation decreases. The overaging treatment temperature is therefore 300 °C or more and 500 °C or less. The overaging treatment temperature is preferably 350 °C or more. The overaging treatment temperature is preferably 450 °C or less.

If the holding time in the overaging treatment is less than 100 s, ferrite transformation from austenite does not progress sufficiently, causing insufficient concentration of C in austenite. As a result, a predetermined amount of retained austenite cannot be obtained, and elongation decreases. If the holding time in the overaging treatment is more than 1000 s, productivity decreases. The holding time in the overaging treatment is therefore 100 s or more and 1000 s or less. The holding time is preferably 120 s or more. The holding time is preferably 600 s or less.

The steel sheet obtained as a result of the overaging treatment may be further subjected to galvanizing treatment, to form a galvanized layer on its surface. Examples of the galvanizing treatment include hot-dip galvanizing treatment, galvannealing treatment, and electrogalvanization treatment. The treatment conditions are not limited, and may comply with conventional methods.

EXAMPLES

Steels having the respective chemical compositions listed in Table 1 with the balance consisting of Fe and inevitable impurities were each obtained by steelmaking to form a steel slab. The steel slab was then heated, and hot rolled to obtain a hot rolled sheet, under the conditions listed in Table 2. After cooling the obtained hot rolled sheet, the hot rolled sheet was coiled, and then cooled to 100 °C or less under the cooling conditions listed in Table 2. Subsequently, the hot rolled sheet was pickled with hydrochloric acid, and cold rolled at a rolling reduction of 40 % to 60 %, to obtain a cold rolled sheet (thickness: 0.8 mm to 1.0 mm). Subsequently, the cold rolled sheet was subjected to annealing and overaging treatment, under the conditions listed in Table 2.

Table 1

| Steel ID | Chemical composition (mass%) | | | | | | | Remarks |
|---|---|---|---|---|---|---|---|---|
| | C | Si | Mn | P | S | Al | N | |
| A | 0.25 | 1.5 | 2.0 | 0.006 | 0.002 | 0.02 | 0.003 | Conforming steel |
| B | 0.18 | 1.2 | 2.2 | 0.005 | 0.002 | 0.02 | 0.002 | Conforming steel |
| C | 0.11 | 1.8 | 3.0 | 0.005 | 0.002 | 0.02 | 0.003 | Comparative steel |
| D | 0.16 | 0.5 | 2.5 | 0.006 | 0.002 | 0.02 | 0.002 | Comparative steel |
| E | 0.27 | 1.8 | 3.8 | 0.006 | 0.002 | 0.02 | 0.002 | Comparative steel |
| F | 0.19 | 1.2 | 2.0 | 0.006 | 0.002 | 0.02 | 0.002 | Conforming steel |
| G | 0.30 | 1.8 | 2.4 | 0.010 | 0.002 | 0.04 | 0.003 | Conforming steel |
| H | 0.16 | 1.9 | 2.2 | 0.008 | 0.001 | 0.03 | 0.002 | Conforming steel |
| I | 0.20 | 1.2 | 3.2 | 0.008 | 0.002 | 0.02 | 0.002 | Conforming steel |

Table 2

| Steel sheet No. | Steel ID | Slab heating temperature (°C) | Finisher delivery temperature (°C) | Cooling rate (°C/s) | Coiling temperature (°C) | Cooling conditions after coiling | Annealing temperature (°C) | Overaging treatment temperature (°C) | Holding time in overaging treatment (s) |
|---|---|---|---|---|---|---|---|---|---|
| 1 | A | 1150 | 880 | 60 | 590 | Water cooling | 740 | 400 | 120 |
| 2 | A | 1160 | 890 | 60 | 420 | Water cooling | 760 | 420 | 150 |
| 3 | A | 1150 | 870 | 60 | 600 | Water cooling | 840 | 410 | 200 |
| 4 | B | 1180 | 870 | 60 | 620 | Water cooling | 750 | 420 | 320 |
| 5 | B | 1180 | 880 | 60 | 600 | Water cooling | 720 | 420 | 150 |
| 6 | C | 1150 | 890 | 60 | 610 | Water cooling | 740 | 400 | 160 |
| 7 | D | 1160 | 880 | 60 | 600 | Water cooling | 750 | 410 | 250 |
| 8 | E | 1150 | 870 | 60 | 590 | Water cooling | 740 | 410 | 250 |
| 9 | F | 1170 | 880 | 60 | 600 | Natural cooling | 750 | 400 | 250 |
| 10 | G | 1120 | 880 | 100 | 620 | Water cooling | 750 | 380 | 400 |
| 11 | G | 1120 | 880 | 100 | 620 | Water cooling | 780 | 450 | 80 |
| 12 | G | 1120 | 880 | 100 | 620 | Water cooling | 810 | 340 | 800 |
| 13 | H | 1160 | 910 | 60 | 580 | Water cooling | 800 | 390 | 600 |
| 14 | H | 1160 | 910 | 60 | 580 | Water cooling | 830 | 350 | 400 |
| 15 | H | 1140 | 900 | 60 | 620 | Water cooling | 740 | 460 | 360 |
| 16 | I | 1160 | 870 | 60 | 640 | Water cooling | 760 | 380 | 800 |
| 17 | I | 1150 | 880 | 60 | 530 | Water cooling | 800 | 450 | 600 |
| 18 | I | 1180 | 890 | 60 | 610 | Natural cooling | 780 | 400 | 600 |
| 19 | I | 1160 | 910 | 60 | 660 | Water cooling | 740 | 420 | 400 |
| 20 | I | 1160 | 870 | 60 | 640 | Water cooling | 800 | 520 | 800 |

For each steel sheet produced in this way, the following structure observation and tensile test were conducted. The results are listed in Table 3.

(1) Structure observation

- Area ratio of ferrite

The area ratio of ferrite was determined as follows: A cross-section of a sample taken from the produced steel sheet was mirror polished, and then etched by nital. Structure observation was then performed at a position of 1/4 of the sheet thickness of the sample (position corresponding to 1/4 of the sheet thickness from the surface in the depth direction), using FE-SEM LEO-1530 made by Carl Zeiss NTS GmbH.

Here, the accelerating voltage was set to 15 kV, and a secondary electron image was observed using an Everhart-Thronley (ET) detector. In the secondary electron image, crystal grains darker than their surroundings in contrast were regarded as ferrite, and the area ratio of ferrite to the whole observation field was determined.

The observation was performed for 10 observation fields at 5000 magnifications. The average of the area ratios of ferrite observed for the respective observation fields was set as the area ratio of ferrite.

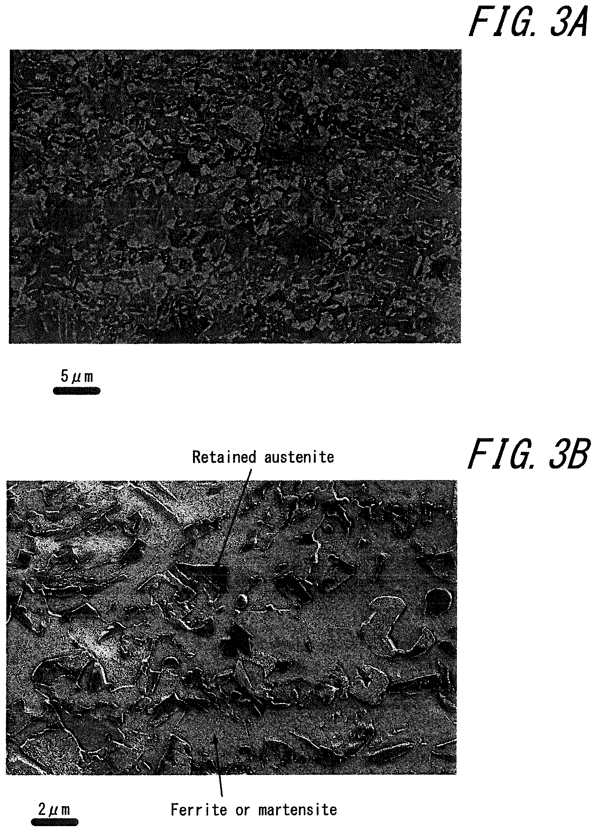

For reference, FIG. 3A illustrates an example of a secondary electron image obtained as a result of observing the steel structure of steel sheet No. 1 at 2000 magnifications.

- Area ratio of retained austenite

The area ratio of retained austenite was determined as follows: A cross-section of a sample taken from the produced steel sheet was mirror polished, and then electropolished with an electrolytic solution obtained by mixing methanol, butyl cellosolve, and perchloric acid at 10:6:1 in volume fraction. Structure observation was then performed at a position of 1/4 of the sheet thickness of the sample, using FE-SEM LEO-1530 made by Carl Zeiss NTS GmbH.

Here, the accelerating voltage was set to 1 kV, and a secondary electron image was observed using an Everhart-Thornley detector. In the secondary electron image, crystal grains darker than their surroundings in contrast were regarded as retained austenite, and the area ratio of retained austenite to the whole observation field was determined.

The observation was performed for 10 observation fields at 5000 magnifications. The average of the area ratios of retained austenite observed for the respective observation fields was set as the area ratio of retained austenite.

For reference, FIG. 3B illustrates an example of a secondary electron image obtained as a result of observing the steel structure of steel sheet No. 1 at 5000 magnifications.

- Area ratio of martensite

The area ratio of martensite was determined by subtracting the area ratio of ferrite and the area ratio of retained austenite determined above, from 100 %.

- Mode of crystal grain circularity of retained austenite

With use of the sample used when determining the area ratio of retained austenite, structure observation was performed at a position of 1/4 of the sheet thickness of the sample, using FE-SEM LEO-1530 made by Carl Zeiss NTS GmbH. The crystal grain circularity of retained austenite observed was determined by image analysis using ImageJ software.

The crystal grain circularity of retained austenite was calculated for 1000 crystal grains while changing the observation field. The distribution of crystal grain circularity of retained austenite calculated was represented by a histogram with a class range of more than $0.1 \times (n - 1)$ and $0.1 \times n$ or less and a class value of $0.1 \times n$ ($n$ is an integer from 1 to 10), and the mode was determined.

(2) Tensile test

A tensile test in compliance with JIS Z 2241 was performed using a JIS No. 5 test piece that complies with JIS Z 2201 and whose longitudinal direction (tensile direction) is at 90° with respect to the rolling direction of the steel sheet, to determine the yield strength (YS), the tensile strength (TS), the yield ratio (YR), and the total elongation (EL).

Table 3

| Steel sheet No. | Steel ID | Steel structure | | | | Mechanical properties | | | | Remarks |
|---|---|---|---|---|---|---|---|---|---|---|
| | | Area ratio of ferrite (%) | Area ratio of martensite (%) | Area ratio of retained austenite (%) | Mode of crystal grain circularity of retained austenite | YS (MPa) | TS (MPa) | YR (%) | EL (%) | |
| 1 | A | 58 | 25 | 17 | 0.9 | 504 | 981 | 51 | 27 | Example |
| 2 | A | 62 | 21 | 17 | 0.5 | 702 | 920 | 76 | 33 | Comparative Example |
| 3 | A | 52 | 41 | 7 | 0.6 | 644 | 995 | 65 | 16 | Comparative Example |
| 4 | B | 57 | 29 | 14 | 0.8 | 638 | 1120 | 57 | 21 | Example |
| 5 | B | 70 | 24 | 6 | 0.6 | 629 | 863 | 73 | 18 | Comparative Example |
| 6 | C | 64 | 24 | 12 | 0.8 | 481 | 839 | 57 | 23 | Comparative Example |
| 7 | D | 60 | 36 | 4 | 0.6 | 629 | 968 | 65 | 15 | Comparative Example |
| 8 | E | 51 | 45 | 4 | 0.7 | 773 | 1317 | 59 | 7 | Comparative Example |
| 9 | F | 53 | 42 | 5 | 0.8 | 560 | 1013 | 55 | 12 | Comparative Example |
| 10 | G | 43 | 36 | 21 | 0.7 | 619 | 1081 | 57 | 22 | Example |
| 11 | G | 46 | 45 | 9 | 0.8 | 720 | 1290 | 56 | 11 | Comparative Example |
| 12 | G | 55 | 23 | 22 | 0.7 | 577 | 1005 | 57 | 24 | Example |
| 13 | H | 63 | 23 | 14 | 0.8 | 537 | 935 | 57 | 21 | Example |
| 14 | H | 48 | 44 | 8 | 0.6 | 691 | 1108 | 62 | 16 | Comparative Example |
| 15 | H | 66 | 18 | 16 | 0.7 | 513 | 911 | 56 | 23 | Example |
| 16 | I | 59 | 22 | 19 | 0.8 | 591 | 1094 | 54 | 21 | Example |

(continued)

| Steel sheet No. | Steel ID | Steel structure | | | | Mechanical properties | | | | Remarks |
|---|---|---|---|---|---|---|---|---|---|---|
| | | Area ratio of ferrite (%) | Area ratio of martensite (%) | Area ratio of retained austenite (%) | Mode of crystal grain circularity of retained austenite | YS (MPa) | TS (MPa) | YR (%) | EL (%) | |
| 17 | – | 53 | 25 | 22 | 0.5 | 644 | 1026 | 63 | 23 | Comparative Example |
| 18 | – | 58 | 33 | 9 | 0.7 | 569 | 988 | 58 | 14 | Comparative Example |
| 19 | – | 61 | 25 | 14 | 0.9 | 473 | 865 | 55 | 25 | Comparative Example |
| 20 | – | 56 | 41 | 3 | 0.9 | 593 | 1062 | 56 | 7 | Comparative Example |

As can be seen from Table 3, all Examples exhibited high strength, i.e. a tensile strength of 900 MPa or more, and excellent workability, i.e. a total elongation of 20 % or more, and also exhibited a low yield ratio, i.e. a yield ratio of less than 60 %.

In Comparative Examples, on the other hand, at least one of the tensile strength, the total elongation, and the yield ratio was outside the desired range.

**Claims**

1. A high-strength cold rolled steel sheet having a tensile strength of 900 MPa or more comprising:

   a chemical composition containing, in mass%,
   C: 0.15 % to 0.35 %,
   Si: 1.0 % to 2.0 %,
   Mn: 1.8 % to 3.5 %,
   P: 0.020 % or less,
   S: 0.0040 % or less,
   Al: 0.01 % to 0.1 %, and
   N: 0.01 % or less,
   with a balance consisting of Fe and inevitable impurities; and
   a steel structure having, in area ratio,
   ferrite: 30 % to 75 %,
   martensite: 15 % to 40 %, and
   retained austenite: 10 % to 30 %,
   wherein in the case where a distribution of crystal grain circularity of the retained austenite is represented by a histogram with a class range of more than 0.1 × (n - 1) and 0.1 × n or less and a class value of 0.1 × n where n is an integer from 1 to 10, a mode of the crystal grain circularity of the retained austenite is 0.7 or more, and circularity of each crystal grain of the retained austenite is calculated according to the following formula:

   $$\text{circularity} = 4\pi S/L^2$$

   where S is an area of the crystal grain of the retained austenite, and L is a perimeter of the crystal grain of the retained austenite, as measured according to the description.

2. The high-strength cold rolled steel sheet according to claim 1, comprising
   a galvanized layer on a surface thereof.

3. A method of producing the high-strength cold rolled steel sheet according to claim 1, the method comprising:

   heating a steel slab to 1100 °C or more and 1200 °C or less, the steel slab containing, in mass%,
   C: 0.15 % to 0.35 %,
   Si: 1.0 % to 2.0 %,
   Mn: 1.8 % to 3.5 %,
   P: 0.020 % or less,
   S: 0.0040 % or less,
   Al: 0.01 % to 0.1 %, and
   N: 0.01 % or less,
   with a balance consisting of Fe and inevitable impurities;
   thereafter hot rolling the steel slab at a finisher delivery temperature of 850 °C or more and 950 °C or less, to obtain a hot rolled sheet;
   cooling the hot rolled sheet, with a cooling rate in a temperature range from the finisher delivery temperature to 700 °C of 50 °C/s or more;
   coiling the hot rolled sheet at 550 °C or more and 650 °C or less;
   thereafter cooling the hot rolled sheet to 100 °C or less by water cooling;
   pickling the hot rolled sheet;
   thereafter cold rolling the hot rolled sheet to obtain a cold rolled sheet;
   annealing the cold rolled sheet at 730 °C or more and 820 °C or less;

thereafter cooling the cold rolled sheet to a temperature range of 300 °C or more and 500 °C or less; and

performing an overaging treatment of holding the cold rolled sheet in the temperature range of 300 °C or more and 500 °C or less for 100 s or more and 1000 s or less.

4. The method according to claim 3, comprising
performing a galvanizing treatment after the overaging treatment.

**Patentansprüche**

1. Hochfestes kaltgewalztes Stahlblech mit einer Zugfestigkeit von 900 MPa oder mehr, umfassend:

eine chemische Zusammensetzung, in Massen-%, enthaltend
C: 0,15 % bis 0,35 %,
Si: 1,0 % bis 2,0 %,
Mn: 1,8 % bis 3,5 %,
P: 0,020 % oder weniger,
S: 0,0040 % oder weniger,
Al: 0,01 % bis 0,1 % und
N: 0,01 % oder weniger,
mit einem Rest, bestehend aus Fe und unvermeidbaren Verunreinigungen; und
eine Stahlstruktur, im Flächenverhältnis, aufweisend
Ferrit: 30 % bis 75 %,
Martensit: 15 % bis 40 % und
Restaustenit: 10 % bis 30 %,
worin in dem Fall, in dem eine Verteilung der Kristallkornkreisförmigkeit des Restaustenits durch ein Histogramm mit einem Klassenbereich von mehr als $0,1 \times (n - 1)$ und $0,1 \times n$ oder weniger und einem Klassenwert von $0,1 \times n$, wobei n eine ganze Zahl von 1 bis 10 ist, dargestellt wird, ein Modus der Kristallkornkreisförmigkeit des Restaustenits 0,7 oder mehr beträgt, und
die Kreisförmigkeit jedes Kristallkorns des Restaustenits gemäß der folgenden Formel berechnet wird:

$$\text{Kreisförmigkeit} = 4\pi S/L^2$$

wobei S für eine Fläche des Kristallkorns des Restaustenits und L für einen Umfang des Kristallkorns des Restaustenits, wie gemäß der Beschreibung gemessen, steht.

2. Hochfestes kaltgewalztes Stahlblech gemäß Anspruch 1, umfassend
eine verzinkte Schicht auf einer Oberfläche davon.

3. Verfahren zur Herstellung des hochfesten kaltgewalzten Stahlblechs gemäß Anspruch 1, das Verfahren umfassend:

das Erwärmen einer Stahlbramme auf 1100 °C oder mehr und 1200 °C oder weniger, die Stahlbramme, in Massen-%, enthaltend
C: 0,15 % bis 0,35 %,
Si: 1,0 % bis 2,0 %,
Mn: 1,8 % bis 3,5 %,
P: 0,020 % oder weniger,
S: 0,0040 % oder weniger,
Al: 0,01 % bis 0,1 % und
N: 0,01 % oder weniger,
mit einem Rest, bestehend aus Fe und unvermeidbaren Verunreinigungen;
danach das Warmwalzen der Stahlbramme bei einer Endausgabetemperatur von 850 °C oder mehr und 950 °C oder weniger, so dass ein warmgewalztes Blech erhalten wird;
das Abkühlen des warmgewalzten Blechs, wobei eine Abkühlgeschwindigkeit in einem Temperaturbereich von der Endausgabetemperatur bis 700 °C 50 °C/s oder mehr beträgt;
das Aufrollen des warmgewalzten Blechs bei 550 °C oder mehr und 650 °C oder weniger;

danach das Abkühlen des warmgewalzten Blechs auf 100 °C oder weniger mittels Wasserkühlung;

das Beizen des warmgewalzten Blechs;

danach das Kaltwalzen des warmgewalzten Blechs, so dass ein kaltgewalztes Blech erhalten wird;

das Glühen des kaltgewalzten Blechs bei 730 °C oder mehr und 820 °C oder weniger;

danach das Abkühlen des kaltgewalzten Blechs auf einen Temperaturbereich von 300 °C oder mehr und 500 °C oder weniger;

und

das Durchführen einer Überalterungsbehandlung, bei der das kaltgewalzte Blech in einem Temperaturbereich von 300 °C oder mehr und 500 °C oder weniger für 100 s oder mehr 1000 s oder weniger gehalten wird.

4. Verfahren gemäß Anspruch 3, umfassend

das Durchführen einer Verzinkungsbehandlung nach der Überalterungsbehandlung.

**Revendications**

1. Tôle d'acier à haute résistance laminée à froid présentant une résistance à la traction de 900 MPa ou plus comprenant :

une composition chimique contenant, en % en poids,
C : 0,15 % à 0,35%,
Si : 1,0 % à 2,0 %,
Mn : 1,8% à 3,5 %,
P : 0,020 % ou moins,
S : 0,0040 % ou moins,
Al : 0,01 % à 0,1 %, et
N : 0,01% ou moins,
le reste consistant en Fe et en impuretés inévitables ; et
une structure en acier présentant, en pourcentage surfacique,
de la ferrite : 30 % à 75 %,
de la martensite : 15 % à 40 %, et
de l'austénite résiduelle : 10 % à 30 %,
dans laquelle dans le cas où une distribution des circularités des grains cristallins de l'austénite résiduelle est représentée par un histogramme ayant une plage de classe de plus de $0,1 \times (n - 1)$ et $0,1 \times n$ ou moins et une valeur de classe de $0,1 \times n$ où n est un nombre entier de 1 à 10, un mode de circularité des grains cristallins de l'austénite résiduelle est de 0,7 ou plus, et
la circularité de chaque grain cristallin de l'austénite résiduelle est calculée selon la formule suivante :

$$\text{circularité} = 4\pi S / L^2$$

où S est une surface du grain cristallin de l'austénite résiduelle, et L est un périmètre du grain cristallin de l'austénite résiduelle, mesurée selon la description.

2. Tôle d'acier à haute résistance laminée à froid selon la revendication 1, comprenant une couche galvanisée sur une surface de celle-ci.

3. Procédé de production de la tôle d'acier à haute résistance laminée à froid selon la revendication 1, le procédé comprenant :

le chauffage d'un bloc d'acier à 1100 °C ou plus et 1200 °C ou moins, le bloc d'acier contenant, en % en poids,
C : 0,15 % à 0,35%,
Si : 1,0 % à 2,0 %,
Mn : 1,8% à 3,5 %,
P : 0,020 % ou moins,
S : 0,0040 % ou moins,
Al : 0,01 % à 0,1 %, et
N : 0,01% ou moins,

le reste consistant en Fe et en impuretés inévitables ;

ensuite le laminage à chaud du bloc d'acier à une température de fourniture de finisseur de 850 °C ou plus et de 950 °C ou moins, pour obtenir une tôle laminée à chaud ;

le refroidissement de la tôle laminée à chaud, avec une vitesse de refroidissement dans une plage de température de la température de fourniture de finisseur à 700 °C de 50 °C/s ou plus ;

l'enroulement de la tôle laminée à chaud à 550 °C ou plus et 650 °C ou moins ;

ensuite le refroidissement de la tôle laminée à chaud à 100 °C ou moins par refroidissement à l'eau ;

le décapage de la tôle laminée à chaud ;

ensuite le laminage à froid de la tôle laminée à chaud pour obtenir une tôle laminée à froid ;

le recuit de la tôle laminée à froid à 730 °C ou plus et 820 °C ou moins ;

ensuite le refroidissement de la tôle laminée à froid à une plage de température de 300 °C ou plus et 500 °C ou moins ;

et

la réalisation d'un traitement de survieillissement consistant à maintenir la tôle laminée à froid dans la plage de température de 300 °C ou plus et 500 °C ou moins pendant 100 s ou plus et 1000 s ou moins.

4. Procédé selon la revendication 3, comprenant
la réalisation d'un traitement de galvanisation après le traitement de survieillissement.

# *FIG. 1*

*FIG. 2A*

Retained austenite

1μm

Ferrite or martensite

*FIG. 2B*

Retained austenite

Ferrite or martensite

*FIG. 3A*

5 μm

*FIG. 3B*

Retained austenite

2 μm          Ferrite or martensite

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5438302 B
- JP 2015014026 A
- JP 2011195956 A
- JP 2012153957 A